# FASCICULE DE BREVET EUROPEEN

(11) **EP 2 803 891 B1**
(45) Date de publication et mention de la délivrance du brevet: **04.05.2016**
(21) Numéro de dépôt: 14168702.0
(22) Date de dépôt: 16.05.2014
(51) Int. Cl.: F16L 3/04, F16B 15/08, F24D 3/14

(54) **Ensemble d'agrafes**
Klammeranordnung
Clip assembly

(30) Priorité: 17.05.2013 FR 1354506
(43) Date de publication de la demande: 19.11.2014
(73) Titulaire: Chappuis, Fabrice Philippe Thierry, 73310 Chanaz (FR)
(72) Inventeur: Chappuis, Fabrice Philippe Thierry, 73310 Chanaz (FR)
(74) Mandataire: Myon, Gérard Jean-Pierre

(56) Documents cités:
- EP-A1- 2 151 634
- DE-A1-102011 013 292
- FR-A1- 2 960 936
- FR-A1- 2 972 780

## Description

La présente invention concerne un ensemble d'agrafes de fixation de tubes ou de câbles sur une structure porteuse, notamment de tubes de circulation de fluide caloporteur ou de câbles chauffants sur des dalles isolantes.

Dans le domaine du chauffage de locaux à usage d'habitation ou professionnel, il est connu d'utiliser des planchers chauffants. La chaleur est transmise au plancher par l'intermédiaire de canalisations fixées au plancher par des agrafes entourant les canalisations. La pose des canalisations requiert un nombre d'agrafes relativement élevé, ce qui impose un rechargement fréquent de l'agrafeuse utilisée.

Pour améliorer l'efficacité du rechargement des agrafeuses, il est connu d'utiliser des ensembles pouvant comprendre environ une trentaine d'agrafes liées les unes aux autres. A cet effet, il est connu de mouler séparément les agrafes puis de les solidariser entre elles, par exemple en les reliant par une bande collée sur la partie centrale des agrafes. Un tel ensemble d'agrafe est fragile car la colle utilisée a tendance à perdre son pouvoir adhésif avec le temps et les variations de température.

En alternative, il est connu de relier les agrafes en faisant fondre en superficie la matière des agrafes. La matière fondue est relativement fine et fragile, ce qui rend l'ensemble d'agrafes peu rigide et fragile.

Ainsi, lors de la manipulation d'un ensemble d'agrafes, les agrafes ont tendance à tourner les unes par rapport aux autres, ce qui rend le chargement de l'agrafeuse fastidieux et difficile. De plus, les liaisons entre les agrafes sont fragiles et par conséquent l'ensemble est susceptible de se sectionner.

Le document FR 2 960 936 A divulgue un ensemble d'agrafes comportant une face avant et une face arrière aptes à venir en contact avec les faces de chaque agrafe adjacente, selon le préambule de la revendication 1.

C'est à ces inconvénients qu'entend plus particulièrement remédier l'invention en proposant un nouvel ensemble d'agrafes ayant une rigidité améliorée, permettant une manipulation aisée de l'ensemble d'agrafes.

A cet effet, l'invention concerne un ensemble d'agrafes de fixation de tubes ou de câbles sur une structure porteuse, selon la revendication 1.

Grâce à l'invention, les pions de coopération des agrafes viennent en contact les uns avec les autres et s'opposent au mouvement de rotation des agrafes lors de la manipulation de l'ensemble d'agrafes. Ainsi, l'ensemble d'agrafes est plus rigide ce qui facilite sa manipulation et évite qu'il se sectionne.

Les revendications dépendantes définissant des caractéristiques avantageuses mais non obligatoires de l'invention.

L'invention sera mieux comprise et d'autres avantages de celle-ci apparaîtront plus clairement à la lumière de la description qui va suivre d'un ensemble d'agrafes de fixation de canalisations sur des planchers et d'un procédé conformes à son principe, donnée uniquement à titre d'exemple et faite en référence aux dessins annexés dans lesquels :
- la figure 1 est une vue en perspective d'un ensemble d'agrafes conforme à l'invention ;
- la figure 2 est une vue en perspective d'une agrafe isolée faisant partie de l'ensemble d'agrafes de la figure 1 ;
- la figure 3 est une vue à plus grande échelle du détail III à la figure 2 ;
- la figure 4 est une vue de face de l'agrafe de la figure 2 ;
- la figure 5 est une vue à plus grande échelle du détail V à la figure 4 ;
- la figure 6 est une vue de côté de l'agrafe de la figure 2 ;
- la figure 7 est une vue à plus grande échelle du détail VII à la figure 6 ;

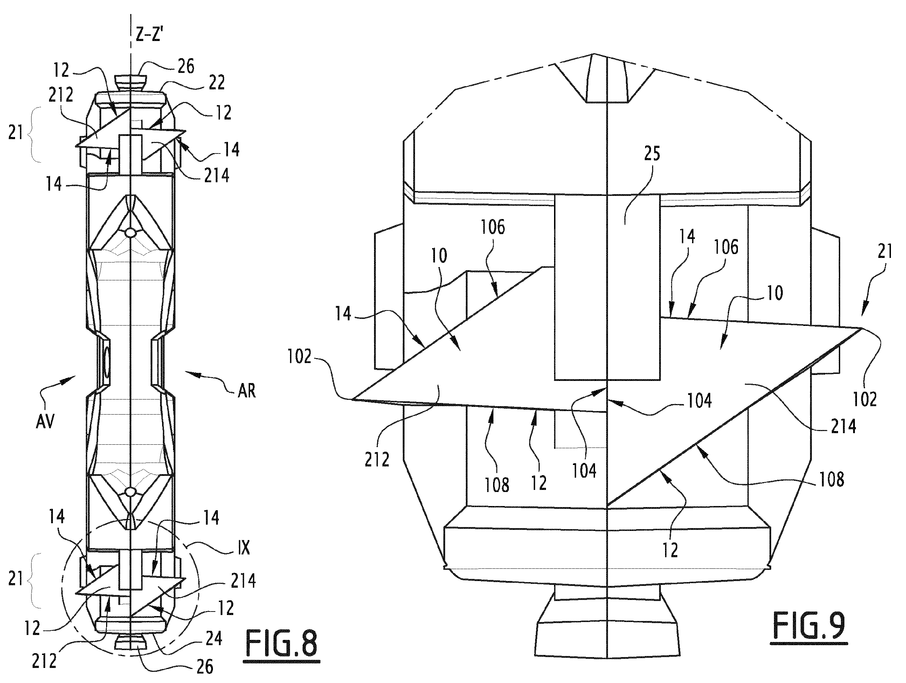

- la figure 8 est une vue de dessus de l'agrafe de la figure 2 ;
- la figure 9 est une vue à plus grande échelle du détail IX à la figure 8 ;
- la figure 10 est une vue à plus grande échelle du détail X à la figure 1 ;
- la figure 11 est une vue en perspective d'une agrafeuse représentée avec des agrafes de l'art antérieur et pouvant être utilisée pour la pose de l'ensemble d'agrafes de la figure 1 ; et
- la figure 12 est une vue à plus grande échelle du détail XIII à la figure 11.

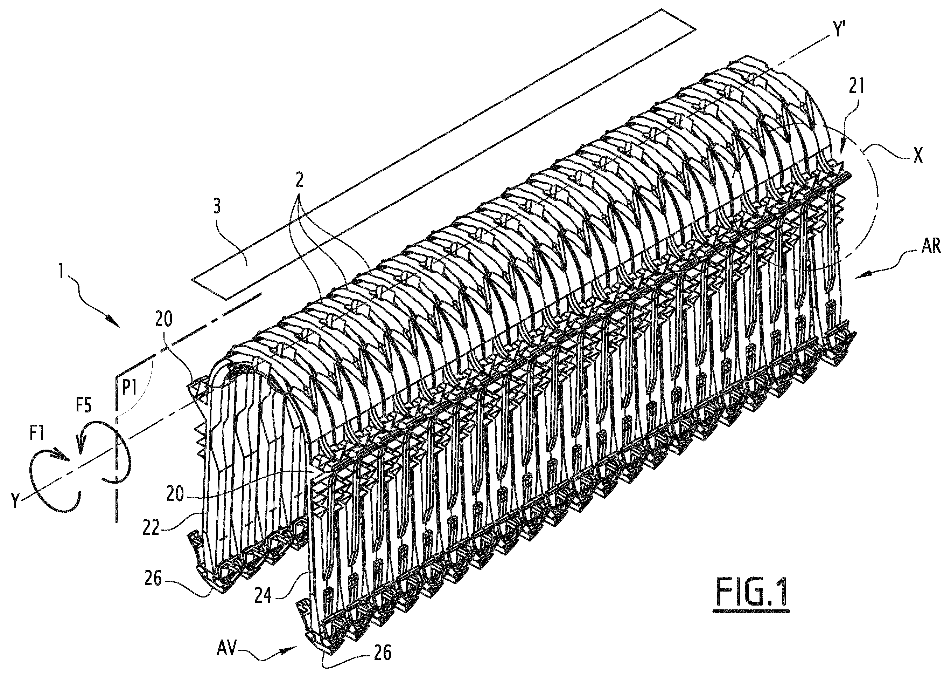

L'ensemble 1 d'agrafes 2 représenté à la figure 1 comporte plusieurs agrafes de fixation 2 identiques. Les agrafes 2 sont généralement utilisées pour fixer des tubes de circulation de fluide caloporteur ou de câbles électriques sur des plaques isolantes, avant d'être noyées dans une chape, dans le cadre d'installations de chauffage de locaux par le sol.

Les agrafes 2 sont juxtaposées le long d'un axe longitudinal Y-Y' de l'ensemble 1. L'ensemble 1 représenté à la figure 1 comporte vingt et une agrafes 2. En pratique, l'ensemble 1 comporte entre quinze et quarante agrafes 2, voire plus.

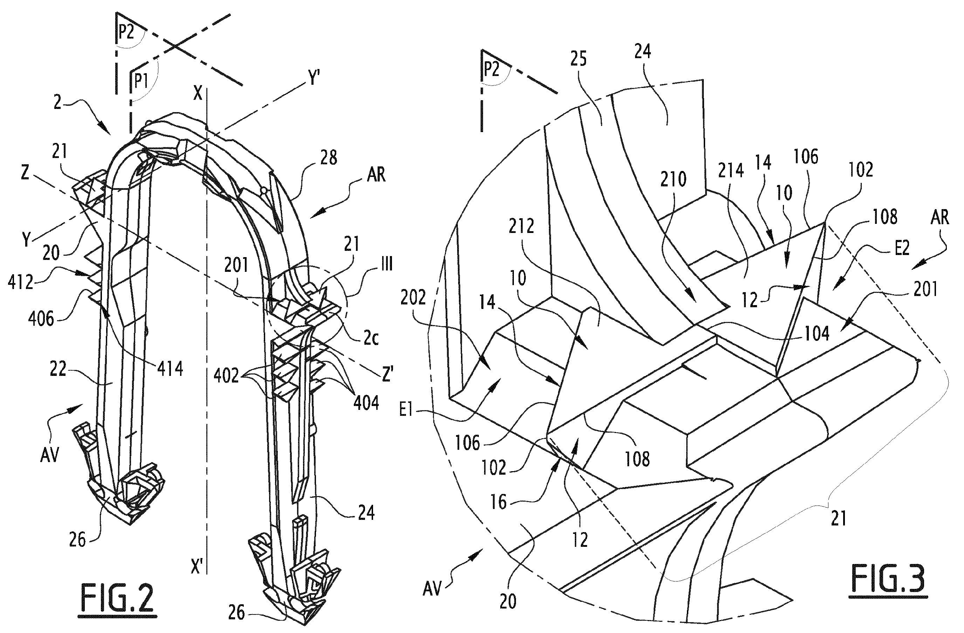

Comme visible à la figure 2, chaque agrafe 2, monobloc et réalisée en matière plastique, présente une forme en U comprenant deux branches globalement parallèles 22 et 24 terminées chacune par une pointe en harpon 26. Les deux branches 22 et 24 sont reliées par une partie médiane 28 sensiblement semi-circulaire centrée sur un plan médian longitudinal P1 de l'ensemble 1 agrafes 2, passant par l'axe Y-Y'. Le plan P1 est également un plan médian longitudinal pour chaque agrafe 2.

Les agrafes 2 comprennent, à proximité des jonctions entre les branches 22 et 24 et la partie médiane 28, des appendices 20 latéraux et externes s'étendant à partir des branches 22 et 24 vers l'extérieur, c'est-à-dire dans des directions opposées par rapport au plan longitudinal P1. Les appendices 20 sont destinés à coopérer avec un dispositif de pose d'agrafe connu par exemple de EP-A-2 361 730.

Les agrafes 2 sont reliées entre elles par une bande adhésive 3 collée sur les parties médianes 28 des agrafes 2. En alternative, la bande adhésive 3 peut être remplacée par d'autres moyens de liaison tels qu'une soudure faisant fondre en superficie la matière des agrafes. L'axe longitudinal Y-Y' passe par les zones des parties médianes 28 en contact avec la bande adhésive 3

On note X-X' un axe longitudinal d'une agrafe 2, équidistant et globalement parallèle aux branches 22 et 24. L'axe X-X' est contenu dans le plan longitudinal P1 et est perpendiculaire à l'axe longitudinal Y-Y'.

Chaque agrafe 2 présente une face avant AV, tournée vers le premier plan de la figure 1, et une face arrière AR opposée à la face avant AV et tournée vers l'arrière plan de la figure 1. Les faces AV et AR sont perpendiculaires à l'axe longitudinal Y-Y'.

On note P2 un plan médian de l'agrafe 2, parallèle aux faces AV et AR et perpendiculaire à l'axe Y-Y'.

Chaque agrafe 2 comporte deux premiers pions de coopération 21 disposés chacun au niveau d'une face supérieure 201 de l'un des appendices 20. Les faces supérieures 201 sont globalement perpendiculaires à l'axe X-X'. Les pions de coopération 21 sont disposés hors de l'espace libre délimité par la forme en U de l'agrafe 2.

On définit un corps de l'agrafe 2, comprenant les branches 22 et 24, la partie médiane 28, les appendices 20 et les pions de coopération 21.

Les branches 22 et 24 sont globalement parallèles à l'axe longitudinal X-X'.

On note R28, le rayon de la partie médiane 28, mesuré perpendiculairement au plan P1, entre le plan P1 et la surface extérieure de la partie médiane 28, c'est-à-dire la surface tournée vers une direction opposée à l'espace libre délimité par les branches 22 et 24 et la partie médiane 28 et s'étendant de part et d'autre du plan P1.

L'extrémité supérieure des branches 22 et 24 est séparée d'une distance égale au rayon R28 du sommet de l'agrafe 2, à savoir de l'extrémité de l'agrafe 2 formée par l'intersection entre le plan P1 et la partie médiane 28. Les branches 22 et 24 portent les appendices 20 et les pions de coopération 21. L'extrémité inférieure des branches 22 et 24 porte les pointes en harpon 26.

Les faces AV et AR sont les faces avant et arrière du corps de l'agrafe 2.

Comme visible à la figure 3, chaque pion de coopération 21 comprend une partie avant 212 et une partie arrière 214. La partie avant 212 est située du côté de la face avant AV par rapport au plan médian P2 et la partie arrière 214 est située du côté de la face arrière AR par rapport au plan médian P2.

Chaque partie 212 et 214 d'un pion de coopération 21 comporte une face supérieure 10, globalement perpendiculaire à l'axe X-X' et de forme globalement triangulaire, dont la pointe 102 est tournée, le long de l'axe longitudinal Y-Y', à l'opposé du plan médian P2. Les faces supérieures 10 des parties 212 et 214 de chaque pion de coopération 21 se touchent au niveau de leurs bases 104 respectives qui sont situées dans le plan médian P2.

Les pointes 102 de chaque partie avant 212 et arrière 214 dépassent au moins partiellement respectivement de la face avant AV et de la face arrière AR de l'agrafe 2 correspondante.

On note d1 le dépassement de la pointe 102 de chaque partie 212 ou 214, mesuré perpendiculairement au plan médian longitudinal P2 à partir de la face AV pour la partie avant 212 et à partir de la face arrière AR pour la partie arrière 214. Le dépassement d1 est strictement positif. De préférence, le dépassement d1 est supérieur à 0,3 mm.

La face supérieure 10 de chaque partie 212 et 214 des pions de coopération 21 comporte un bord interne 106 et un bord externe 108 qui forment avec la base 104 un contour globalement triangulaire. Le bord interne 106 est situé du côté de l'espace libre délimité par la forme en U de l'agrafe 2.. Le bord externe 108 est situé à l'opposé de cet espace libre.

Une nervure de renfort 25 facultative, s'étendant de part et d'autre et parallèlement au plan médian P2, relie chaque branche 24 et 26 à la face supérieure 201 de l'appendice 20 correspondant à cette branche 22 ou 24. Une partie de chaque nervure de renfort 25 s'étend dans une échancrure 210 du pion de coopération 21 correspondant. Chaque échancrure 210 forme une découpe au niveau de la base 104 des faces supérieures 10 de ce pion de coopération 21.

De manière facultative, chaque branche 22 et 24 comporte également une nervure de renfort 27 s'étendant de part et d'autre et parallèlement au plan médian P2, dans une zone située entre les appendices 20 et les pointes en harpon 26.

Le bord externe 108 des parties avant 212 et le bord interne 106 des parties arrière 214 sont globalement parallèles à l'axe longitudinal Y-Y'. Le bord interne 106 des parties avant 212 et le bord externe 108 des parties arrière 214 sont inclinés par rapport à l'axe longitudinal Y-Y'. Ainsi, chaque face supérieure 10 a globalement la forme d'un triangle rectangle dont l'angle droit est délimité entre la base 104 et le bord interne 106 pour la partie arrière 214 et entre la base 104 et le bord externe 108 pour la partie avant 212.

Chaque partie 212 et 214 des pions de coopération 21 comporte une face externe 12, attenante au bord externe 108 de la face supérieure 10, ainsi qu'une face interne 14, attenante au bord interne 106 de la face supérieure 10.

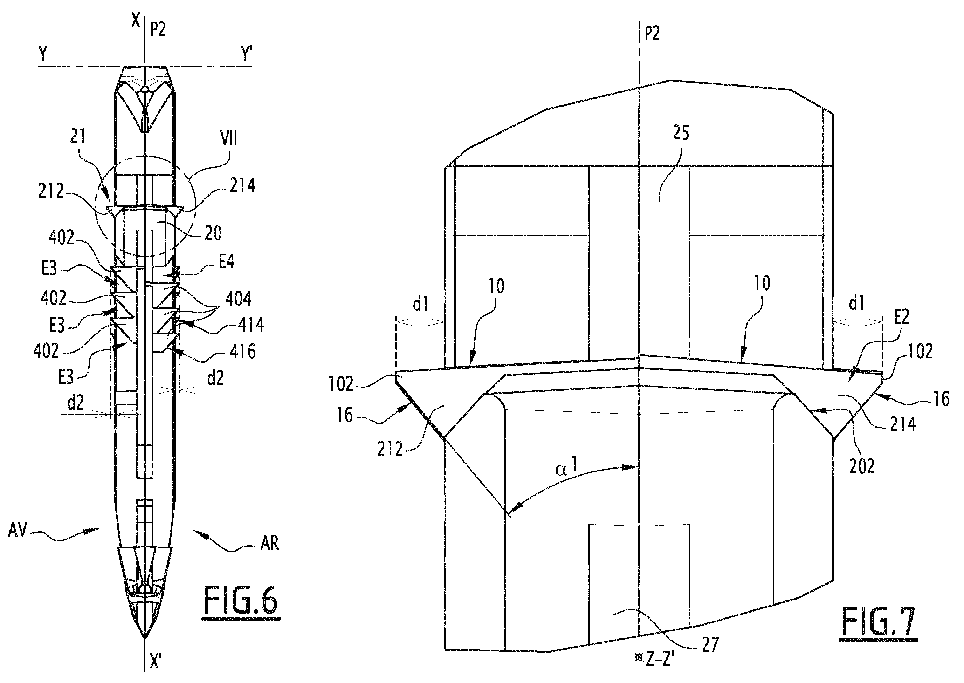

Chaque partie 212 et 214 des pions de coopération 21 comporte également une face d'extrémité 16 s'étendant à partir de la pointe 102 en direction de l'extrémité inférieure de l'agrafe 2, formée par les pointes en harpon 26. La face d'extrémité 16 de la partie avant 212 est inclinée, le long de l'axe longitudinal Y-Y', vers la face arrière AR de l'agrafe 2. La face d'extrémité 16 de la partie arrière 214 est inclinée, le long de l'axe longitudinal Y-Y', vers la face avant AV de l'agrafe 2. Comme visible à la figure 7, les faces d'extrémité 16 sont inclinées d'un angle α1, autour d'un axe transversal Z-Z' perpendiculaire au plan médian longitudinal P1 de l'agrafe 2, par rapport au plan médian transversal P2 de l'agrafe 2, vers l'extrémité inférieure de l'agrafe 2, définie par les pointes en harpon 26, et vers le plan médian transversal P2.

De préférence, l'angle α1 est supérieur à 10°, de préférence encore supérieur à 30°.

Les parties 212 et 214 de chaque pion de coopération 21 sont décalées l'une par rapport à l'autre le long de l'axe longitudinal Y-Y'. Ainsi, chaque agrafe 2 n'est pas exactement symétrique par rapport au plan médian P2. Les pointes 102 des parties avant 212 sont décalées perpendiculairement au plan médian longitudinal P1, par rapport aux pointes 102 des parties arrière 214.

Chaque agrafe 2 présente une symétrie de rotation d'angle 180° autour de l'axe X-X'. Ainsi, lorsqu'une agrafe 2, considérée seule, effectue une rotation de 180° autour de l'axe X-X', les branches 22 et 24 permutent et l'agrafe 2 ainsi retournée se superpose avec ses contours initiaux. De cette manière, lors de la fabrication de l'ensemble 1 d'agrafes 2, le sens des agrafes 2 n'a pas d'incidence, ce qui permet de juxtaposer les agrafes 2 sans se préoccuper de l'orientation des faces AV et AR.

Lorsque l'ensemble 1 est en configuration assemblée, c'est-à-dire lorsque les agrafes 2 sont reliées les unes aux autres, les faces AV et AR des agrafes 2 de l'ensemble 1 sont en contact les unes avec les autres, voire sensiblement en contact compte tenu des jeux fonctionnels, respectivement avec les faces AR et AV des deux agrafes 2 adjacentes, à l'exception des deux agrafes 2 situées aux extrémités longitudinales de l'ensemble 1 pour lesquelles l'une des faces AV ou AR n'est pas en contact avec une autre agrafe. Dans la suite, cette exception n'est plus mentionnée.

Dans cette configuration, les faces internes 14 des parties avant 212 des pions de coopération 21 des branches 24 de chaque agrafe 2 sont en contact, voire sensiblement en contact, avec les faces externes 12 des parties arrière 214 des pions de coopération 21 de l'agrafe 2 accolée à la face avant AV de cette agrafe 2. De même, les faces externes 12 des parties avant 212 des pions de coopération 21 des branches 22 de chaque agrafe 2 sont en contact, voire sensiblement en contact, avec les faces internes 14 des parties arrière 214 des pions de coopération 21 de l'agrafe 2 en contact avec la face avant AV de cette agrafe 2.

Ainsi, une première zone de contact de la branche 22 est constituée par la face externe 12 de la partie avant 212 du pion de coopération 21, et une première zone de contact de la branche 24 est constituée par la face interne 14 de la partie avant 212 du pion de coopération 21. Les premières zones de contact 12 et 14 de chaque branche 22 et 24 d'une première agrafe 2 sont prévues pour venir en contact avec des premières zones d'appui de chaque branche 22 et 24 de l'agrafe 2 adjacente en contact avec la face arrière AR de la première agrafe 2. Les premières zones d'appui sont formées, pour la branche 22, par la face interne 14 de la partie arrière 214 du pion de coopération 21 et, pour la branche 24, par la face externe 12 de la partie arrière 214 du pion de coopération 21.

En outre, dans la configuration assemblée, la face interne 14 de la partie arrière de la branche 22 d'une première agrafe 2 constitue une deuxième zone de contact, qui est en contact avec une deuxième zone d'appui de la branche 22 de l'agrafe 2 adjacente en contact avec la face arrière AR de la première agrafe 2. Cette deuxième zone d'appui est constituée par la face externe 12 de la partie avant 212 du pion de coopération 21 de la branche 22.

De plus, la face externe 12 de la partie arrière 214 du pion de coopération 21 de la branche 24 d'une première agrafe 2 constitue une deuxième zone de contact, qui est en contact avec une deuxième zone d'appui de la branche 24 de l'agrafe 2 adjacente en contact avec la face arrière AR de la première agrafe 2. Cette deuxième zone d'appui est constituée par la face interne 14 de la partie avant 212 du pion de coopération 21 de la branche 24.

Les pointes 102 des parties avant 212 de chaque agrafe 2 sont logées dans un espace libre arrière E2 ménagé dans l'appendice 20 de l'agrafe 2 adjacente en contact avec la face avant AV de cette agrafe 2, et les pointes 102 des parties arrière 214 de chaque agrafe 2 sont logées dans un espace libre avant E1 ménagé dans l'appendice 20 de l'agrafe 2 adjacente en contact avec la face avant AV de cette agrafe 2, ce qui permet d'accoler les faces AV et AR des agrafes 2. Les espaces libres E1 et E2 sont délimités chacun par un chanfrein 202 ménagé sur une arête de l'appendice 20 située au niveau de la face AV ou AR de l'agrafe 2. Les espaces libres avant E1 et arrière E2 sont des renfoncements qui sont en retrait vers le plan médian P2 de l'agrafe 2, respectivement par rapport à la face avant AV et arrière AR de l'agrafe 2.

Le long de l'axe Y-Y' et dans une direction allant de la face arrière AR vers la face avant AV de l'agrafe 2, le chanfrein 202 situé au niveau de la face avant AV de l'agrafe 2 est incliné vers l'extrémité inférieure de l'agrafe 2, définie par les pointes en harpon 2. Le long de l'axe Y-Y' et dans une direction allant de la face avant AV vers la face arrière AR de l'agrafe 2, le chanfrein 202 situé au niveau de la face arrière AR de l'agrafe 2 est incliné vers l'extrémité inférieure de l'agrafe 2.

Par ailleurs, dans la configuration assemblée, les faces d'extrémité 16 de chaque partie 212 et 214 des pions de coopération 21 de chaque branche 22 et 24 d'une première agrafe 2 constituent des troisièmes zones de contact, qui sont en contact avec des troisièmes zones d'appui formées par les chanfreins 202 des deux agrafes 2 adjacentes.

Compte tenu de la symétrie de rotation des agrafes 2, lorsque les agrafes 2 de l'ensemble 1 sont en contact les unes avec les autres, les faces externes 12 des parties arrière 214 des pions de coopération 21 des branches 24 sont en contact avec les faces internes 14 des parties avant 212 des pions de coopération 21 de l'agrafe 2 accolée à la face arrière AR de cette agrafe 2. De même, les faces internes 14 des parties arrière 214 des pions de coopération 21 des branches 22 de chaque agrafe 2 sont en contact avec les faces externes 12 des pions de coopération 21 des parties avant 212 de l'agrafe 2 accolée à la face arrière AR de cette agrafe 2.

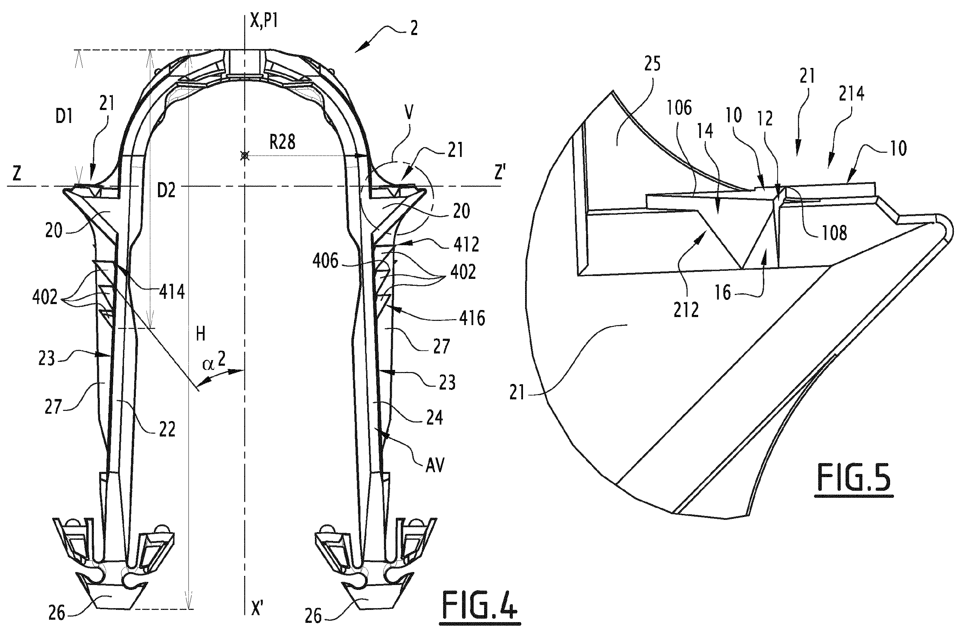

De préférence, la distance D1, représentée à la figure 4 et mesurée le long de l'axe X-X' entre chaque pion de coopération 21 et l'extrémité de l'agrafe 2 formée par la partie médiane 28, est inférieure ou égale à 95 % de la hauteur totale H de l'agrafe 2, mesurée le long de l'axe X-X', de préférence encore inférieure ou égale à 50 %.

Lors de la manipulation de l'ensemble 1 d'agrafes 2, chaque agrafe 2 a tendance à tourner par rapport aux agrafes 2 adjacentes autour de l'axe Y-Y', ce qui tend à rendre l'ensemble 1 peu rigide. Grâce aux pions de coopération 21, la rotation autour de l'axe Y-Y' d'une première agrafe 2 par rapport à une deuxième agrafe 2 en contact avec la face avant AV de la première agrafe 2, dans le sens représenté par la flèche F1 à la figure 1, est bloquée par le contact entre les premières zones de contact 12 et 14 des pions de coopération 21 de la première agrafe 2 avec les premières zones d'appui 12 et 14 des pions de coopération de la deuxième agrafe 2.

De plus, la rotation autour de l'axe Y-Y' de la première agrafe 2 par rapport à une troisième agrafe 2 en contact avec la face arrière AR de la première agrafe 2, dans le sens représenté par la flèche F5 à la figure 1, est bloquée par le contact entre les deuxièmes zones de contact 12 et 14 des pions de coopération 21 de la première agrafe 2 avec les deuxièmes zones d'appui 12 et 14 des pions de coopération de la troisième agrafe 2.

La rotation autour de l'axe Y-Y' de la première agrafe 2 par rapport aux deux agrafes 2 adjacentes est également limitée par le contact entre les troisièmes zones de contact 16 des pions de coopération 21 de la première agrafe 2 avec les troisièmes zones d'appui 202 des deux agrafes 2 adjacentes.

Chaque contact entre une zone de contact et une zone d'appui permet de créer une solidarisation des agrafes 2, grâce aux frottements. Les contacts entre les premières et deuxièmes zones de contact et les premières et deuxièmes zones d'appui s'opposent également mécaniquement à la rotation des agrafes 2 selon les flèches F1 et F5.

Ainsi, lors de la manipulation de l'ensemble 1 d'agrafes 2, chaque agrafe 2 de l'ensemble 1 ne se décale pas angulairement, ou se décale peu, par rapport aux agrafes 2 adjacentes. Par conséquent, l'ensemble 1 est relativement rigide, ce qui facilite sa manipulation, en particulier le chargement de l'agrafeuse. De cette manière, la bande adhésive 3, moins sollicitée mécaniquement, ne se décolle pas, et la soudure de matière fondue a moins tendance à se briser.

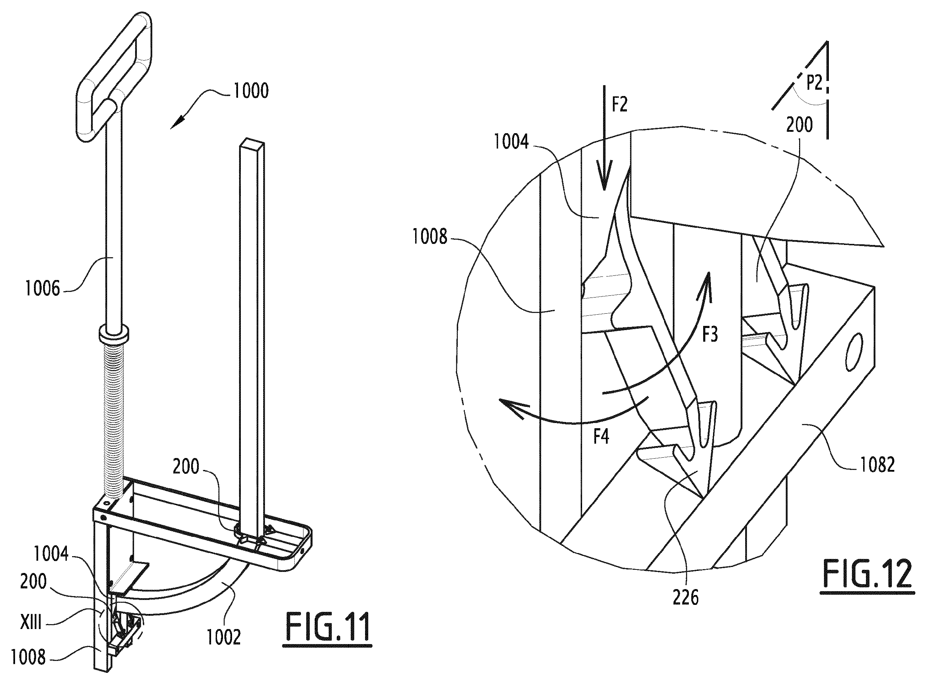

La figure 11 montre un outil 1000 de pose d'agrafes 2 qui permet aux poseurs de répartir des agrafes 2 sur la longueur d'un tube de circulation de fluide caloporteur, sans avoir à se baisser pour la pose de chaque agrafe 2. Les agrafes 2 glissent sous l'effet de la gravité, le long d'un guide courbe 1002 qui les amène en regard d'un piston 1004 manoeuvré par une tige d'actionnement 1006, à l'intérieur d'un corps de guidage 1008. Le piston 1004 prend appui sur les appendices 20 de l'agrafe 2.

Lorsque les faces AV et AR d'une première agrafe 2 de l'ensemble 1 sont en contact avec les faces AV et AR des agrafes 2 adjacentes, la face d'extrémité 16 de la partie avant 212 du pion de coopération 21 et la face d'extrémité 16 de la partie arrière 214 du pion de coopération 21 sont en contact avec respectivement le chanfrein 202 de l'espace libre arrière E2 et le chanfrein 202 de l'espace libre avant E1 des agrafes 2 adjacentes. En d'autres termes, les troisièmes zones de contact 16 sont en contact avec les troisièmes zones d'appui 202.

Comme représenté aux figures 11 et 12 pour une agrafe 200 de l'art antérieur, lorsque le piston 1004 pousse l'agrafe 200, la poussée F2 a tendance à faire pivoter l'agrafe 200 selon la flèche F3, autour d'un axe perpendiculaire au plan médian P2 de l'agrafe 200, de sorte que les pointes en harpon 226 de l'agrafe 2 butent contre une armature 1082 du corps de guidage 1008, disposée horizontalement. Le poseur doit alors intervenir pour décoincer l'agrafe 200.

Cet inconvénient est supprimé avec l'ensemble 1 d'agrafes 2 de l'invention car les surfaces d'extrémité 16 de la partie arrière 214 des pions de coopération 21 de l'agrafe 2 en cours de pose glissent contre les chanfreins 202 des appendices 20 de l'agrafe 2 adjacente, ce qui fait tourner l'agrafe 2 autour d'un axe perpendiculaire au plan médian P2 de l'agrafe 2, dans un sens F4 tendant à éloigner les pointes en harpon 26 des agrafes 2 restantes. Les chanfreins 202 forment ainsi des surfaces de glissement. Ainsi, le coincement des agrafes 2 dans le corps de guidage 8 est évité.

De manière facultative, les branches 22 et 24 des agrafes 2 sont équipées de dents 402 et 404. Chaque branche 22 et 24 comporte des dents avant 402 et des dents arrière 404, disposées respectivement du côté de la face avant AV et de la face arrière AR de l'agrafe 2 par rapport aux nervures 27. Les dents 402 et 404 sont situées dans la zone définie entre les appendices 20 et les pointes en harpon 26.

De préférence, la distance D2, mesurée le long de l'axe X-X' entre l'extrémité de l'agrafe 2 formée par la partie médiane 28 et la dent 402 ou 404 la plus éloignée de cette extrémité, est inférieure ou égale à 95 % de la hauteur totale H de l'agrafe 2, mesurée le long de l'axe X-X', de préférence encore inférieure à 50 %.

Les dents 402 et 404 sont placées en dessous des appendices 20, sur une face externe 23 des branches 22 et 24 tournée à l'opposé de l'espace libre délimité par la forme en U de l'agrafe 2. Les dents 402 et 404 sont donc disposées hors de cet espace libre. Comme visible à la figure 6, les dents avant 402 d'une branche 22 ou 24 sont décalées, le long de l'axe X-X', par rapport aux dents arrière 404 de cette branche 22 ou 24.

Chaque dent 402 et 404 est de forme globalement triangulaire et comporte une pointe 406 qui forme une partie dépassante qui dépasse au moins partiellement respectivement de la face AV ou AR de l'agrafe 2.

Chaque ensemble formé par une dent avant 402 et une dent arrière 404 de la branche 22 ou 24 qui porte la dent avant 402 forme un deuxième pion de coopération 421. Chaque deuxième pion de coopération 421 comprend ainsi une partie avant formée par une dent avant 402, et une partie arrière formée par une dent arrière 404.

Les deuxièmes pions de coopération 421 font partie du corps de l'agrafe 2 et sont portés par les branches 22 et 24.

Chaque dent avant 402 et chaque dent arrière 404 comprend une première zone de contact formée par une arête 412 de la dent avant 402 ou par une arête 412 de la dent arrière 404. Les arêtes 412 constituent la pointe 406 de la dent 402 ou 404. Ces arêtes 412 sont perpendiculaires au plan médian longitudinal P2 et s'étendent au-delà de la face avant AV de l'agrafe 2 pour la dent avant 402, et au-delà de la face arrière AR pour la dent arrière 404.

On note d2 le dépassement des dents avant 402 ou arrière 404, par rapport à la face AV ou AR respectivement. Le dépassement d2 est mesuré perpendiculairement au plan médian P2, entre l'arête 412 de chaque dent avant 402 et la face avant AV de l'agrafe 2, ou entre l'arête 412 de chaque dent arrière 404 et la face arrière AR de l'agrafe 2. Le dépassement d2 est strictement positif. De préférence, le dépassement d2 est supérieur à 0,3 mm.

Chaque dent 402 et 404 comporte une première zone d'appui formée par une face inclinée 416 de cette dent.

La face inclinée 416 de chaque dent avant 402 est inclinée, le long de l'axe longitudinal Y-Y', vers la face arrière AR de l'agrafe 2. La face inclinée 416 de chaque dent arrière 404 est inclinée, le long de l'axe longitudinal Y-Y', vers la face avant AV de l'agrafe 2.

Les faces inclinées sont inclinées d'un angle α2, autour de l'axe transversal Z-Z', par rapport au plan médian transversal P2 de l'agrafe 2, vers l'extrémité inférieure de l'agrafe 2, définie par les pointes en harpon 26, et vers le plan médian transversal P2.

De préférence, l'angle α2 est supérieur à 10°, de préférence encore supérieur à 30°.

Chaque dent 402 et 404 comporte également une deuxième zone de contact formée par une face interne 414 de la dent 402 ou 404 qui est parallèle au plan médian longitudinal P2 et qui s'étend au-delà de la face avant AV de l'agrafe pour la dent avant 402 ou au-delà de la face arrière AR de l'agrafe 2 pour la dent arrière 404. Chaque face interne 414 s'étend dans le prolongement de la face externe 23 de la branche 22 ou 24 à laquelle est rattachée la dent 402 ou 404.

Etant donnée la géométrie des dents 402 et 404, la première zone de contact 412 des dents avant 402 les plus proches des appendices 20 ne repose pas sur une surface d'appui, pour les branches 22 et 24.

Plus précisément, lorsque les faces AV et AR d'une première agrafe 2 de l'ensemble 1 sont en contact avec les faces AV et AR des agrafes 2 adjacentes et que les agrafes 2 sont alignées les unes avec les autres le long de l'axe X-X', les premières zones de contact 412 sont séparées d'une distance non nulle des premières zones d'appui 416. Cette distance est prévue pour faciliter l'assemblage de l'ensemble 1 d'agrafes 2 en évitant les coincements des dents 402 et 404.

Lorsque les faces AV et AR d'une première agrafe 2 de l'ensemble 1 sont en contact avec les faces AV et AR de deux agrafes 2 adjacentes, le contact entre les premières zones de contact 412 et les premières zones d'appui 416 s'effectue après que la première agrafe 2 se soit déplacée d'une distance D inférieure à 2 mm, par rapport aux deux agrafes 2 adjacentes, le long de l'axe X-X'.

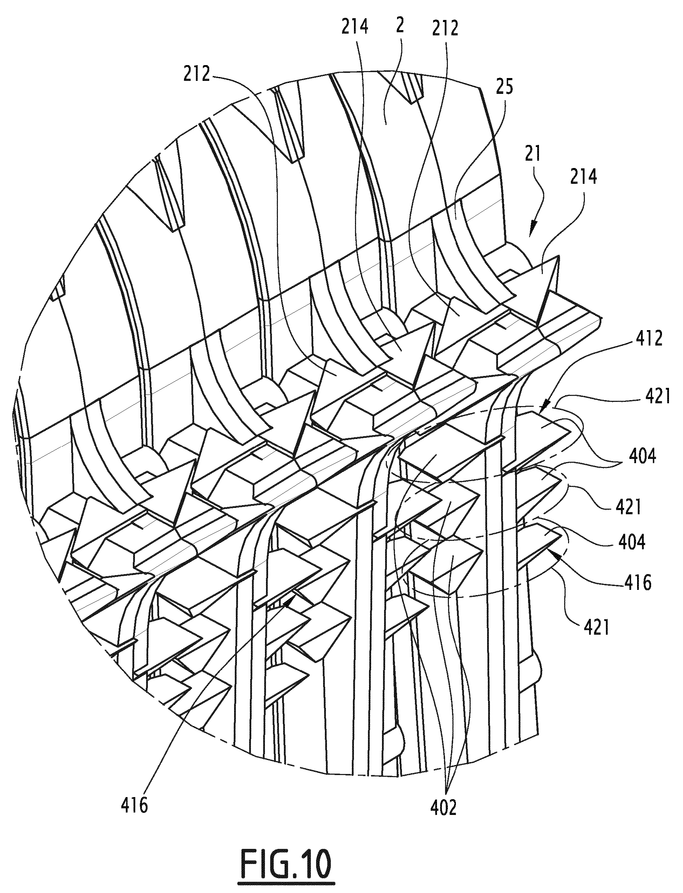

Comme visible à la figure 10, lorsque les faces AV et AR des agrafes 2 de l'ensemble 1 sont en contact les unes avec les autres, les dents 402 et 404 des branches 22 et 24 d'une première agrafe 2 sont positionnées contre la face externe 23 des branches 22 et 24 des agrafes 2 adjacentes. Ainsi, les branches 22 et 24 de chaque agrafe 2 sont enserrées de part et d'autre par les dents 402 et 404 des agrafes 2 adjacentes.

En d'autres termes, dans la configuration assemblée, les deuxièmes zones de contact 414 des dents 402 et 404 sont en contact avec des deuxièmes zones d'appui constituées par les faces latérales 23 des branches 22 et 24 des agrafes 2 adjacentes.

De plus, les dents 402 et 404 de la première agrafe 2 ne se superposent pas avec les dents 402 et 404 des agrafes 2 adjacentes car les dents 402 et 404 de chaque branche 22 et 24 sont décalées le long de l'axe X-X'. Des premiers espaces libres E3 sont définis au niveau de la face avant AV, autour de chaque dent avant 402, et des deuxièmes espaces libres E4 sont définis au niveau de la face arrière AR, autour de chaque dent arrière 404. Les espaces libres avant E3 et arrière E4 sont des renfoncements qui sont en retrait vers le plan médian P2 de l'agrafe 2, respectivement par rapport à la face avant AV et arrière AR de l'agrafe 2.

Les pointes 406 de chaque dent avant 402 d'une agrafe 2 sont logées dans les espaces libres arrière E4 ménagés dans l'agrafe 2 adjacente en contact avec la face avant AV de cette agrafe 2. Les pointes 406 de chaque dent arrière 404 d'une agrafe 2 sont logées dans les espaces libres avant E3 ménagés dans l'agrafe 2 adjacente en contact avec la face arrière AR de cette agrafe 2.

Lors de la manipulation de l'ensemble 1 d'agrafes 2, grâce aux dents 402 et 404, la rotation autour de l'axe Y-Y' d'une première agrafe 2 par rapport à une deuxième agrafe 2 en contact avec la face avant AV de la première agrafe 2, dans le sens représenté par la flèche F1 et dans le sens opposé F5, est bloquée. Les dents 402 et 404 permettent ainsi d'améliorer la rigidité de l'ensemble 1. Plus précisément, le contact entre les premières et les deuxièmes zones de contact 412 et 414, respectivement avec les premières et les deuxièmes zones d'appui 416 et 23, génère des frottements qui s'opposent à la rotation des agrafes 2.

Dans l'exemple représenté sur les figures, chaque branche 22 et 24 comporte trois dents avant 402 et trois dents arrière 404. La dent avant 402 de chaque branche 22 et 24, et respectivement la dent arrière 404, la plus proche de l'appendice 20, dépasse plus loin de la face externe 23 de la branche 22 ou 24 par rapport aux autres dents 402 ou 404 de cette branche 22 ou 24.

On note d2 le dépassement des pointes 406 des dents avant 402 ou arrière 404, par rapport à la face AV ou AR respectivement. Le dépassement d2 est mesuré perpendiculairement au plan médian P2. Le dépassement d2 est strictement positif. De préférence, le dépassement d2 est supérieur à 0,3 mm.

Ainsi, lorsque le piston 1004 de l'agrafeuse 1000 pousse une agrafe 2, les faces inclinées 416 des dents arrière 404 de l'agrafe 2 en cours de pose glissent contre les arêtes 412 des dents avant 402 de l'agrafe suivante, ce qui fait tourner l'agrafe 2 autour d'un axe perpendiculaire au plan médian P2 de l'agrafe 2, dans un sens F4 tendant à éloigner les pointes en harpon 26 des agrafes 2 restantes. Ainsi, le coincement des agrafes 2 dans le corps de guidage 8 est évité.

L'invention n'est pas limitée à la géométrie des pions de coopération 21 et 421 décrits et représentés.

Dans le cadre de l'invention, chaque zone de contact est formée notamment par une arête ou par une surface. Le contact entre une zone de contact et une zone d'appui peut être un contact surface/surface, surface/arête, arête/surface ou arête/arête. Concernant les premiers pions de contact 21, les premières zones de contact 12 et 14, les deuxièmes zones de contact 12 et 14, les troisièmes zones de contact 16, ainsi que les premières zones d'appui 12 et 14, les deuxièmes zones d'appui 12 et 14 et les troisièmes zones d'appui 202 sont des surfaces. Concernant les deuxièmes pions de contact 421, les premières zones de contact 412 sont des arêtes, tandis que les deuxièmes zones de contact 414, les premières zones d'appui 416 et les deuxièmes zones d'appui 23 sont des surfaces.

Le nombre de zones de contact de chaque pion de coopération 21 et 421 peut varier.

Pour chaque agrafe 2, au moins l'un des pions de coopération 21 ou 421 de chaque branche 22 et 24 forme une zone d'appui. Par ailleurs, pour chaque agrafe 2, l'une des zones d'appui peut être formée par une partie de l'agrafe 2 qui ne fait pas partie d'un pion de coopération 21 ou 421. Dans l'exemple représenté sur les figures, c'est le cas pour les troisièmes zones d'appui 202 des pions de coopération 21, qui sont formées par les chanfreins 202 des appendices 20, ainsi que pour les deuxièmes zones d'appui 23 des pions de coopération 421, qui sont formées par les faces latérales des branches 22 et 24.

## Revendications

1. Ensemble (1) d'agrafes (2) de fixation de tubes ou de câbles sur une structure porteuse, ces agrafes (2) étant juxtaposées et reliées entre elles, chaque agrafe (2) présentant une forme en U comprenant deux branches globalement parallèles (22, 24), chaque agrafe (2) comportant une face avant (AV) et une face arrière (AR) opposées, prévues pour venir en contact avec les faces (AV, AR) de chaque agrafe (2) adjacente, **caractérisé**
**en ce que** chaque branche (22, 24) de chaque agrafe (2) comporte au moins un pion de coopération (21) ayant au moins une partie dépassante (212, 214) qui dépasse au moins partiellement (d1, d2) de la face avant (AV) et/ou de la face arrière (AR) de l'agrafe (2),
**en ce que** chaque agrafe (2) comporte au moins un espace libre (E1, E2) situé au niveau de la face avant (AV) et/ou de la face arrière (AR) de l'agrafe (2), de sorte que lorsque les faces (AV, AR) d'une première agrafe (2) de l'ensemble (1) sont en contact avec les faces (AV, AR) de deux agrafes (2) adjacentes, chaque partie dépassante (212, 214) de la première agrafe (2) est logée au moins partiellement dans l'un des espaces libres (E1, E2) ménagé dans l'une des agrafes (2) adjacentes,
et **en ce que** chaque partie dépassante (212, 214) comprend au moins une zone de contact (12, 14, 16), de sorte que lorsque les faces (AV, AR) d'une première agrafe (2) de l'ensemble (1) sont en contact avec les faces (AV, AR) de deux agrafes (2) adjacentes, la zone de contact (12, 14, 16) de la première agrafe (2) est en contact avec une zone d'appui (12, 14, 202) de l'une des agrafes (2) adjacentes.

2. Ensemble (1) selon la revendication 1, **caractérisé en ce que** les agrafes (2) de l'ensemble (1) sont identiques.

3. Ensemble (1) selon l'une des revendications 1 ou 2, **caractérisé en ce que** chaque agrafe (2) présente une symétrie de rotation d'angle 180° autour d'un l'axe (X-X') équidistant et globalement parallèle aux branches (22, 24) de cette agrafe (2).

4. Ensemble (1) selon l'une des revendications précédentes, **caractérisé en ce qu'**une distance (D2), mesurée le long d'un axe (X-X') équidistant et globalement parallèle aux branches (22, 24) de cette agrafe (2), entre l'extrémité de l'agrafe (2) formée par la partie médiane (28) et le pion de coopération 21 le plus éloignée de cette extrémité,
est inférieure ou égale à 95 % de la hauteur totale (H) de l'agrafe (2), mesurée le long de cet axe (X-X'), de préférence inférieure à 50 %.

5. Ensemble (1) selon l'une des revendications précédentes, **caractérisé en ce qu'**au moins l'un des pions de coopération (21) de chaque agrafe (2) forme l'une des zones d'appui (12, 14).

6. Ensemble (1) selon l'une des revendications précédentes, **caractérisé en ce qu'**au moins l'une des zones d'appui (202, 23) de chaque agrafe (2) est formée par une partie de l'agrafe (2) qui ne fait pas partie d'un pion de coopération (21).

7. Ensemble (1) selon l'une des revendications précédentes, **caractérisé en ce que** chaque zone d'appui (12, 14, 202, 416, 23) et chaque zone de contact (12, 14, 16) est une arête ou une surface.

8. Ensemble (1) selon l'une des revendications précédentes, **caractérisé en ce qu'**un dépassement (d1) de chaque partie dépassante (212, 214) mesuré perpendiculairement à un plan médian (P2) de l'agrafe (2) parallèle aux faces (AV, AR) et à partir de la face (AV) lorsque la partie dépassante (212) dépasse de la face avant (AV)ou à partir de la face arrière (AR) lorsque la partie dépassante (214) dépasse de la face arrière (AR), est supérieur à 0,3 mm.

9. Ensemble (1) selon l'une des revendications précédentes, **caractérisé en ce que** lorsque les faces (AV, AR) d'une première agrafe (2) de l'ensemble (1) sont en contact avec les faces (AV, AR) de deux agrafes (2) adjacentes, le contact entre les zones d'appui (416) de dents équipant les branches de la première agrafe et les zones de contact ( 412, 414) de dents équipant les branches d'une agrafe adjacente s'effectue après que la première agrafe (2) se soit déplacée d'une distance inférieure à 2 mm, par rapport aux deux agrafes (2) adjacentes, le long d'un axe (X-X') globalement parallèle aux branches (22, 24) de cette agrafe (2).

10. Ensemble (1) selon l'une des revendications précédentes, **caractérisé en ce qu'**au moins l'une des zones de contact (12, 14, 16) d'au moins l'un des pions de coopération (21) de chaque branche (22, 24) de chaque agrafe (2) est formée par une surface qui est inclinée, autour d'un axe transversal (Z-Z') perpendiculaire à un plan médian longitudinal (P1) de l'agrafe (2) qui est équidistant et globalement parallèle aux branches (22, 24) de cette agrafe (2), par rapport à un plan médian transversal (P2) de l'agrafe (2) parallèle aux faces (AV, AR), vers une extrémité de l'agrafe (2) définie par les pointes en harpon (26) et vers le plan médian transversal (P2).

## Patentansprüche

1. Gruppe (1) von Schellen (2) zur Befestigung von Rohren oder von Kabeln an einer Trägerstruktur, wobei diese Schellen (2) aneinandergereiht sind und untereinander verbunden sind, wobei jede Schelle (2) eine U-Form hat mit zwei im Wesentlichen parallelen Armen (22, 24), wobei jede Schelle (2) eine Vorderseite (AV) und eine Rückseite (AR) aufweist, die entgegengesetzt sind und die dazu vorgesehen sind, um mit den Seiten (AV, AR) jeder benachbarten Schelle (2) in Kontakt zu kommen,
**dadurch gekennzeichnet,**
**dass** jeder Arm (22, 24) jeder Schelle (2) wenigstens ein Kooperations-Ansatzstück (21) aufweist, das wenigstens einen vorstehenden Abschnitt (212, 214) hat, der wenigstens teilweise (d1, d2) von der Vorderseite (AV) und/oder von der Rückseite (AR) der Schelle (2) vorsteht,
**dass** jede Schelle (2) wenigstens einen Freiraum (E1, E2) hat, der auf Höhe der Vorderseite (AV) und/oder auf Höhe der Rückseite (AR) der Schelle (2) angeordnet ist, sodass, wenn die Seiten (AV, AR) einer ersten Schelle (2) der Gruppe (1) in Kontakt sind mit den Seiten (AV, AR) von zwei benachbarten Schellen (2), jeder vorstehende Abschnitt (212, 214) der ersten Schelle (2) zumindest teilweise in einem der Freiräume (E1, E2), die in der einen der benachbarten Schellen (2) vorgesehen sind, aufgenommen ist, und
**dass** jeder vorstehende Teil (212, 214) wenigstens eine Kontaktzone (12, 14, 16) aufweist, sodass, wenn die Seiten (AV, AR) einer ersten Schelle (2) der Gruppe (1) in Kontakt mit den Seiten (AV, AR) der beiden benachbarten Schellen (2) sind, die Kontaktzone (12, 14, 16) der ersten Schelle (2) in Kontakt mit einer Auflagezone (12, 14, 202) von der einen der benachbarten Schellen (2) ist.

2. Gruppe (1) gemäß Anspruch 1, **dadurch gekennzeichnet, dass** die Schellen (2) der Gruppe (1) identisch sind.

3. Gruppe (1) gemäß einem der Ansprüche 1 oder 2, **dadurch gekennzeichnet, dass** jede Schelle (2) eine Rotations-Symmetrie um einen 180°-Winkel um eine Achse (X-X') hat, die zu beiden Armen (22, 24) dieser Schelle (2) im gleichen Abstand sowie im Wesentlichen parallel ist.

4. Gruppe (1) gemäß einem der vorhergehenden Ansprüche, **dadurch gekennzeichnet, dass** ein Abstand (D2), der entlang einer Achse (X-X') gemessen ist, die zu den beiden Armen (22, 24) dieser Schelle (2) im gleichen Abstand und im Wesentlichen parallel ist, zwischen dem Ende der Schelle (2), das von dem mittleren Abschnitt (28) gebildet ist, und dem Kooperations-Ansatzstück (21), das von diesem Ende am weitesten weg ist, kleiner oder gleich 95%, bevorzugt kleiner als 50%, der Gesamthöhe (H) der Schelle (2) ist, die entlang dieser Achse (X-X') gemessen ist.

5. Gruppe (1) gemäß einem der vorhergehenden Ansprüche, **dadurch gekennzeichnet, dass** wenigstens eines der Kooperations-Ansatzstücke (21) jeder Schelle (2) eine der Auflagezonen (12, 14) bildet.

6. Gruppe (1) gemäß einem der vorhergehenden Ansprüche, **dadurch gekennzeichnet, dass** wenigstens eine der Auflagezonen (202, 23) jeder Schelle (2) von einem Abschnitt der Schelle (2) gebildet ist, der nicht Teil eines Kooperations-Ansatzstücks (21) ist.

7. Gruppe (1) gemäß einem der vorhergehenden Ansprüche, **dadurch gekennzeichnet, dass** jede Auflagezone (12, 14, 202, 416, 23) und jede Kontaktzone (12, 14, 16) eine Kante oder eine Fläche ist.

8. Gruppe (1) gemäß einem der vorhergehenden Ansprüche, **dadurch gekennzeichnet, dass** ein Überstand (d1) jedes vorstehenden Abschnitts (212, 214), der gemessen ist senkrecht zu einer mittleren Ebene (P2) der Schelle (2) parallel zu den beiden Seiten (AV, AR) und ausgehend von der Seite (AV), wenn der vorstehende Abschnitt (212) von der Vorderseite (AV) aus vorsteht, oder ausgehend von der Hinterseite, wenn der vorstehende Abschnitt (214) von der Hinterseite (AR) aus vorsteht, größer als 0,3 mm ist.

9. Gruppe (1) gemäß einem der vorhergehenden Ansprüche, **dadurch gekennzeichnet, dass**, wenn die Flächen (AV, AR) einer ersten Schelle (2) der Gruppe (1) in Kontakt mit den Flächen (AV, AR) der beiden benachbarten Schellen (2) sind, der Kontakt zwischen den Auflagezonen (416) der Zähne, mit denen die Arme der ersten Schelle ausgestattet sind, und der Kontaktzonen (412, 414) der Zähne, mit denen die Arme einer benachbarten Schelle ausgestattet sind, erfolgt nachdem die erste Schelle (2) sich um eine Distanz kleiner als 2 mm verlagert hat bezüglich der beiden benachbarten Schellen (2) entlang einer Achse (X-X'), die im Wesentlichen parallel zu den Armen (22, 24) dieser Schelle (2) ist.

10. Gruppe (1) gemäß irgendeinem der vorhergehenden Ansprüche, **dadurch gekennzeichnet, dass** wenigstens die eine der Kontaktzonen (12, 14, 16) wenigstens eines der Kooperations-Ansatzstücke (21) jedes Arms (22, 24) jeder Schelle (2) von einer Fläche gebildet ist, die um eine transversale Achse (Z-Z') senkrecht zu einer mittleren Längsebene (P1) der Schelle (2), die zu den Armen (22, 24) dieser Schelle (2) im gleichen Abstand und im Wesentlichen parallel ist, bezüglich einer mittleren Transversalebene (P2) der Schelle (2), die parallel zu den Flächen (AV, AR) ist, geneigt ist zu einem Ende der Schelle (2) hin, das von den Harpunenspitzen (26) definiert ist, und zu der mittleren Transversalebene (P2) hin.

## Claims

1. Assembly (1) of clips (2) for fixing tubes or cables to a carrying structure, the clips (2) being juxtaposed and connected together, each clip (2) having a U-shape comprising two generally parallel legs (22, 24), each clip (2) having a front face (AV) and an opposing rear face (AR) which are to come into contact with the faces (AV, AR) of each adjacent clip (2),
**characterised in that**
each leg (22, 24) of each clip (2) comprises at least one cooperation pin (21) having at least one projecting portion (212, 214) which projects at least partially (d1, d2) from the front face (AV) and/or from the rear face (AR) of the clip (2),
**in that** each clip (2) comprises at least one free space (E1, E2) situated in the region of the front face (AV) and/or of the rear face (AR) of the clip (2) so that, when the faces (AV, AR) of a first clip (2) of the assembly (1) are in contact with the faces (AV, AR) of two adjacent clips (2), each projecting portion (212, 214) of the first clip (2) is housed at least partially in one of the free spaces (E1, E2) formed in one of the adjacent clips (2),
and **in that** each projecting portion (212, 214) comprises at least one contact zone (12, 14, 16) so that, when the faces (AV, AR) of a first clip (2) of the assembly (1) are in contact with the faces (AV, AR) of two adjacent clips (2), the contact zone (12, 14, 16) of the first clip (2) is in contact with a support zone (12, 14, 202) of one of the adjacent clips (2).

2. Assembly (1) according to claim 1, **characterised in that** the clips (2) of the assembly (1) are identical.

3. Assembly (1) according to either claim 1 or claim 2, **characterised in that** each clip (2) has 180° rotational symmetry about an axis (X-X') which is equidistant from and generally parallel to the legs (22, 24) of the clip (2).

4. Assembly (1) according to any one of the preceding claims, **characterised in that** a distance (D2), measured along an axis (X-X') which is equidistant from and generally parallel to the legs (22, 24) of the clip (2), between the end of the clip (2) that is formed by the middle portion (28) and the cooperation pin (21) that is furthest away from that end, is less than or equal to 95% of the total height (H) of the clip (2) measured along that axis (X-X'), preferably less than 50%.

5. Assembly (1) according to any one of the preceding claims, **characterised in that** at least one of the cooperation pins (21) of each clip (2) forms one of the support zones (12, 14)

6. Assembly (1) according to any one of the preceding claims, **characterised in that** at least one of the support zones (202, 23) of each clip (2) is formed by a portion of the clip (2) which does not form part of a cooperation pin (21).

7. Assembly (1) according to any one of the preceding claims, **characterised in that** each support zone (12, 14, 202, 416, 23) and each contact zone (12, 14, 16) is an edge or a surface.

8. Assembly (1) according to any one of the preceding claims, **characterised in that** a projection (d1) of each projecting portion (212, 214), measured perpendicularly to a mid-plane (P2) of the clip (2) parallel to the faces (AV, AR) and starting from the face (AV) when the projecting portion (212) projects from the front face (AV) or starting from the rear face (AR) when the projecting portion (214) projects from the rear face (AR), is greater than 0.3 mm.

9. Assembly (1) according to any one of the preceding claims, **characterised in that**, when the faces (AV, AR) of a first clip (2) of the assembly (1) are in contact with the faces (AV, AR) of two adjacent clips (2), contact between the support zones (416) of teeth provided on the legs of the first clip and the contact zones (412, 414) of teeth provided on the legs of an adjacent clip is effected after the first clip (2) has moved by a distance of less than 2 mm, relative to the two adjacent clips (2), along an axis (X-X') which is generally parallel to the legs (22, 24) of that clip (2).

10. Assembly (1) according to any one of the preceding claims, **characterised in that** at least one of the contact zones (12, 14, 16) of at least one of the cooperation pins (21) of each leg (22, 24) of each clip (2) is formed by a surface which is inclined, about a transverse axis (Z-Z') perpendicular to a longitudinal mid-plane (P2) of the clip (2) which is equidistant from and generally parallel to the legs (22, 24) of the clip (2), relative to a transverse mid-plane (P2) of the clip (2) parallel to the faces (AV, AR), towards an end of the clip (2) that is defined by the harpoon-shaped tips (26) and towards the transverse mid-plane (P2).
